# EUROPEAN PATENT APPLICATION

(11) **EP 1 434 015 A2**
(43) Date of publication of application: **30.06.2004**
(21) Application number: 03029574.5
(22) Date of filing: 22.12.2003
(51) Int. Cl.: F24H 9/00, F24H 8/00

(54) **Universal, standard semi-condensing or condensing wall boiler**

(30) Priority: 23.12.2002 IT AN20020061
(71) Applicant: MERLONI TERMOSANITARI S.p.A., 60044 Fabriano (Ancona) (IT)
(72) Inventor: Marchetti, Ruggero, Merloni Termosanitari S.P.A., 60044 Fabriano (AN) (IT); Rossi, Pietro, Merloni Termosanitari S.P.A., 60044 Fabriano (AN) (IT); Venanzoni, Marcello, Merloni Termosanitari S.P.A., 60044 Fabriano (AN) (IT); Marra, Lorenzo, Merloni Termosanitari S.P.A., 60044 Fabriano (AN) (IT)
(74) Representative: Gentili, Enrico

(57) **Abstract**

It is described a condensing (CMC) wall boiler, equipped with one or more by-passes (bPS; bCS; bCR; bIS) adapted to mix comburent air or flue gas taken from the combustion room (4) with flue gas in exit from the heat exchanger (8).

According to this invention, the physical state of the flue gas mixed in this manner is able to prevent the flue gas from releasing condensate in the flue (C) thus making it possible to connect said boiler (CMC) even to flues that are not resistant to acid condensate.

According to a variant of the invention, it is also possible to cause the complete re-evaporation of the condensate produced downstream of the heat exchanger (8) so that it is not necessary to provide a condensate evacuation duct (10.3).

According to the operating methods possible without condensate release in the flue (C), said condensing boiler (CMC) produces an identical yield typical of condensing boilers, or reduced yield equivalent to that typical of high yield boilers.

## Description

This invention relates to a means for installing condensing wall boilers in flues designed exclusively for non-condensing boilers.

The applicant has also presented another patent on this same date, together with the present patent application, entitled "Multi-purpose wall mounted forced draught boiler", wherein the applicant describes in great detail the advantages to be gained by installing forced draught wall boilers in natural draught flues. According to the said invention, on forced circulation wall boilers equipped with special means, it is possible to obtain the evacuation of flue gas into the flue without overpressure compared to environmental room pressure. Up till now, it has been necessary to maintain natural draught wall boilers that are technologically outdated in production for the market, exclusively for installation in flues not suited to forced draught. According to the invention in said application "Multi-purpose wall mounted forced draught boiler", it is also possible to connect both sealed and open room boilers to the same flue. This provides the possibility of standardising wall boiler models resulting in considerable savings both in project design as well as in production, and in distribution to end users.

However, said invention does not indicate how condensing boilers may be installed in unsuitable flues. It is well known that the condensation formed by the flue gas of said boilers is loaded with strongly aggressive acid substances. For this reason, flues adapted for condensing wall boilers must not only be hermetic as a rule, since condensing boilers are basically only forced draught models, but must also be resistant to chemical agents, and therefore said flues are much more expensive; and consequently very often, especially in multi-property apartment buildings, the proprietors do not all agree to their installation. This means that it is necessary to maintain a large range of differentiated boilers in production, both condensing and non-condensing models, to guarantee the availability of models that can be installed in any type of flue, and furthermore, because very often the possibility does not even exist for the installation of an evacuation system for the condensation produced inside the boiler itself.

As far as prior art concerning the purpose of the present invention is concerned, it should be remembered that, as well as condensing boilers, there are also high performance yield boilers (at a level of approximately 100% in reference to Low Calorific Power), non-condensing boilers and the so-called "semi-condensing" boilers.

For certain variants of the invention it should also be remembered that today it is possible to measure excess combustion air using sensors, and therefore the air can be continually adjusted with accurate precision; in reference to this aspect, refer to the application for Italian Patent AN2002A000038.

Lastly it must be remembered that all modem wall boilers, especially forced circulation, sealed room models with total comburent air and gas "pre-mix", are controlled by a centralised unit (hereafter referred to more briefly as "unit") that is able to decide the operating mode, taking into consideration a wide range of parameters that indicate the system status; this is limited to simply establishing the appropriate mathematical models after experimentation, sometimes a long and complex operation, but dictated by known methods within the competence of technicians skilled in the art.

The main object of the present invention is to indicate simple and economical means that, once they have been made operative, will prevent condensing wall boilers from releasing acid condensation in the flues to which the said boilers are connected.

A further object of the present invention is to indicate simple and economical means that, once they have been made operative, will prevent condensing wall boilers from forming condensation.

A further object of the present invention is to permit considerable product standardisation by producing condensing boiler models equipped with simple means that once they have been made operative, transform said boilers from condensing models to semi-condensing or high efficiency yield models.

Another object of at least some of the variants of the present invention, together with the description provided in the aforesaid patent application entitled "Multi-purpose wall mounted forced draught boiler", is to furnish a further mode for product standardisation by producing condensing boiler models equipped with simple means that, once they are operative, permit the connection of said boilers to any type of flue, whether said flues are destined for natural or forced circulation boilers or for condensing or non-condensing boilers.

These and other objects are attained, according to this invention, with the use of appropriate accessory means that will be made clear in the present description and by the appended drawings that show certain preferred embodiments, and by the appended claims that form an integrated part of the same description.

Figure 1 schematically shows a condensing wall boiler according to certain possible variants of the invention.

Figure 2 shows in qualitative form, a psychrometrical diagram: the x-coordinate representing the temperature and the ordinate representing the absolute humidity of the gases produced by combustion, or in other words, by the flue gas; the graph shows various physical flue gas states, identified by their temperature and humidity levels as obtained in a standard condensing boiler, and after modification according to the invention.

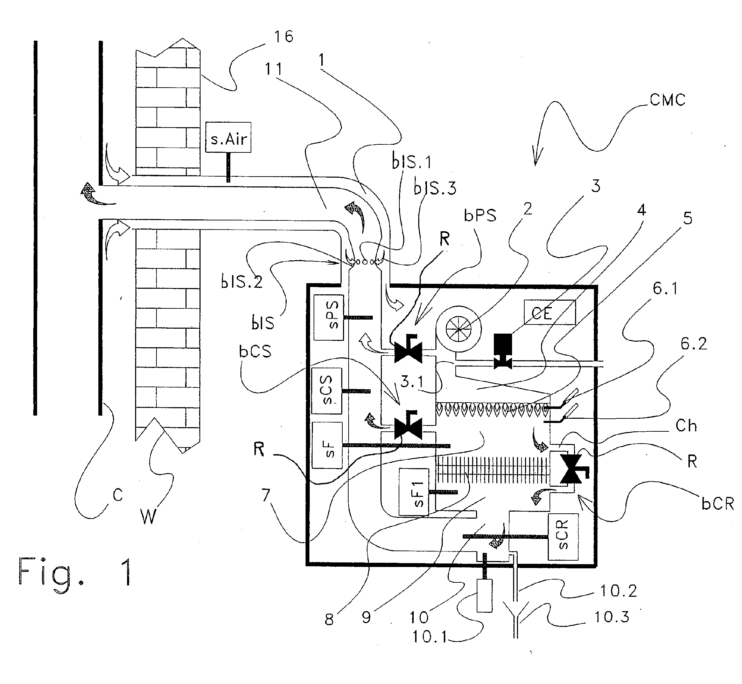

The CMC condensing boiler according to the invention and schematically illustrated in figure 1, is a sealed room pre-mix wall type boiler equipped with excess air control sensors, however the invention refers indifferently to any type of combustible fired condensing heat generator, for example instant gas-fired condensing bathroom water heaters. The CMC boiler shown in figure 1 takes in the comburent air from the exterior through the wall W, and evacuates the flue gas in the flue C, represented as being external to the wall W in the drawing for clearer graphical identification. The following elements are indicated on the CMC boiler: the intake duct 1 through which the fan 2 sucks in the comburent air from the exterior; the motorised valve 3 used to adjust the combustible gas flow injected through opening 3.1 into the comburent air and combustible gas premix room 4; the burner 5; two possible combustion parameter control sensors 6.1 and 6.2 adapted in particular, to identify excess comburent air with accurate precision. 7 refers to the combustion room; 8 refers to the flue gas heat exchanger - thermal carrier fluid; 9 refers to the flue gas collector room; 10 refers to the condensation collector area, possibly equipped with a condensation level sensor 10.1 and a drainer tube to evacuate condensate into the drain 10.3; 11 refers to the flue gas evacuation duct, generally coaxial with the comburent air intake duct 1 in sealed room boilers. At least on certain variants, the CMC boiler is also equipped with an EC unit, to control the appropriate boiler operations according to this invention; in fact said EC unit can be composed of the unit previously foreseen basically on all condensing boilers, and adapted to perform known functions, and appropriately modified for the objects of the invention.

All the elements listed herein, except for the sensors 6.1 and 6.2 and the sensor 10.1 are typical elements found on sealed room premix condensing wall boilers according to prior art. As far as said sensors 6.1. and 6.2, are concerned, they are not essential to the present invention but simply useful in certain variants, and their function mode is known as described in the application for Italian Patent AN2002A000038. Similarly, the sensor 10.1 is also necessary only on certain variants of the invention that will be described later.

Furthermore, according to this invention, one or more of the following by-passes have also been foreseen: the "pre-mix - discharge" by-pass bPS; the "combustion-discharge" by-pass bCS; the "combustion-collector" by-pass bCR; and the "introduced air-discharge" by-pass bIS.

Lastly, one or more sensors may also be present: s.Air, sF, sF1, sPS, sCS, sCR, used to identify the physical state of the aeriform substances. Said sensors could consist of temperature and/or absolute humidity sensors for said aeriform substances.

The arrows indicate the flow direction of the aeriform substances (comburent air or flue gas) according to possible variants of this invention; in particular, the grey arrows indicate flue gas flow direction and the white arrows show the airflow.

In the appended figures, said by-passes bPS, bCS, bCR are all represented by the same number of by-pass ducts Ch, all of which can be closed off using an appropriate valve R. It should also be emphasised however, that said by-passes bPS, bCS, bCR can be realised in many various ways, and that for this reason, the indication "by-pass duct Ch + shut-off valve R" is purely symbolic and is used to represent any type of known means adapted to permit or prevent the passage of aeriform substances through the said by-passes bPS, bCS, bCR, since said by-passes bPS, bCS, bCR can be made operative manually or automatically according to the variant of this invention and that will be described later. According to said variants, said valves R could consist of, for example, manually or automatically operated cocks, on-off valves or gate valves, or simple removable plugs, or any other equivalent means suitable for this purpose.

On the other hand, the "introduced air-discharge" by-pass bIS, is illustrated as one or more bIS. 1 passages, equivalent to the by-pass ducts Ch positioned on the neck of a Venturi tube bIS.2 and a corresponding increase in the section bIS.3 in duct 1, but this by-pass can also be replaced by equivalent means and manual or automatic cut-off means R, not illustrated in the figure.

Before describing said by-pass function, below is the definition of certain notions, that are well-known, relative to the behaviour of damp air, and provided to identify the terminology and symbols that will be used in following descriptions. Obviously, the principles of said notions are also perfectly valid for combustion flue gas.

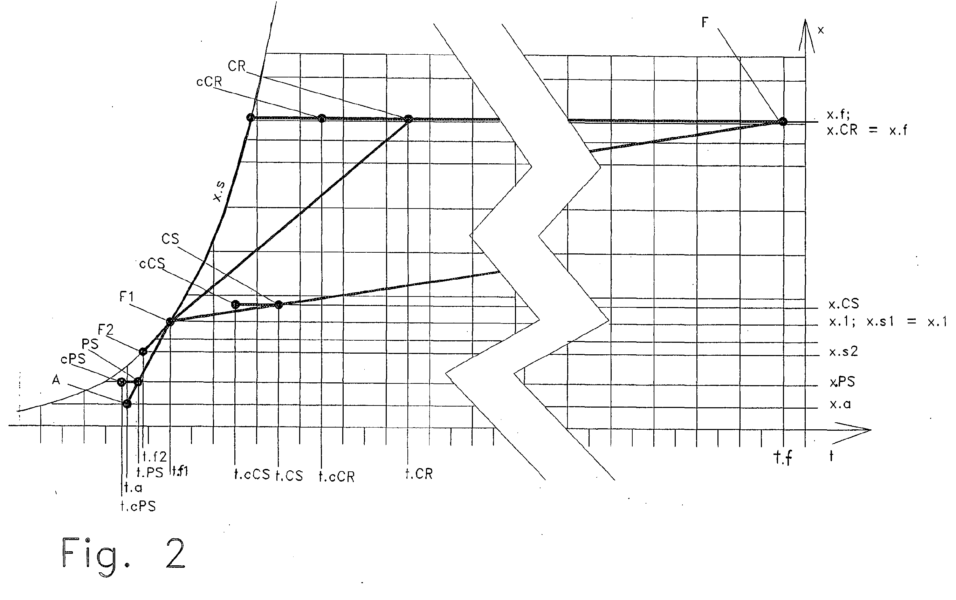

In reference to figure 2, in the ratio of said absolute fume humidity, indicated by "x", between the weight quantity of the steam dissolved in the flue gas and the weight quantity of the flue gas there is an absolute humidity saturation x.s. compared to the maximum steam quantity that can be dissolved in flue gas; any steam quantity over this maximum forms condensation. Damp flue gas whose absolute humidity level is equal to x.s. is defined as being in a state of saturation, or saturated; on the other hand, if the absolute humidity level is equal to x < x.s, The flue gases are defined as being in a state of unsaturation or unsaturated. Saturation temperature refers to saturated flue gas.

Flue gas has an absolute humidity level x.f. much higher than that of the comburent air level x.a., because as well as the steam dissolved in the air, the steam produced by hydrocarbon combustion is also added to the flue gas. The absolute saturation humidity x.s. of the flue gas depends basically on the physical state of the flue gas. If we ignore the effect of the pressure, that is practically equal to the atmospheric pressure, the absolute saturation humidity x.s. is reduced considerably as the flue gas temperature drops. Consequently, even non-saturated flue gas emitted by a boiler can release condensation in flues C, if they are cooled in the flue to the point where the absolute saturation humidity x.s drops below the actual humidity level x.

Vice versa, it is also possible that flue gas that exits in saturated form from the heat exchanger 8 of the CMC boiler, as occurs in condensing boilers, does not release any condensation, although it is subject to cooling in the flue C,
- if the flue gas is first diluted with air that is less humid, so that the absolute humidity level x drops below the absolute saturation humidity level x.s. that corresponds with the temperature reached in the flue C;
- or if the flue gas is heated beforehand, so that the following cooling action in flue C is not sufficient to make the absolute saturation humidity level x.s. drop below the actual humidity level x;
- or lastly, through the combined effect of both the aforesaid conditions.

These are the effects obtained according to the invention, by using one or more aforementioned by-passes, bPS, bCS, bCR, bIS, but since the result obtained is not identical in each case, they must be examined individually.

On examining the case where condensing is underway on the CMC boiler, in reference to figure 2, F refers to the physical state of the flue gas on exit from the burner 5, characterised by the temperature f.t. and by the absolute humidity level x.f.; F1 indicates the physical state of the flue gas on exit from the heat exchanger 8, characterised by the temperature t.f1, and by the absolute humidity x.1 that coincides with the absolute saturation humidity x.s1; F2 refers to the physical state of the flue gas on exit from the flue C that would occur if the flue gas were not subject to physical state modification through the effect of one or more of the by-passes, bPS, bCS, bCR, bIS, characterised by the temperature t.f2 and by the absolute saturation humidity x.s2. It can be noted that the cooling action in the flue C, from t.f1 to t.f2 provokes the release of condensate in weight quantity equal to x.s1- x.s2 per flue gas weight unit.

However, on passing through the "pre-mix - discharge" by-pass bPS, part of the external cold air in the state A, with an absolute humidity x.a, and temperature t.a., taken in by the fan 2 in duct 1, passes directly from the pre-mix room 4 to the flue gas evacuation duct 11, where it is mixed with the flue gas, bringing them both to the state PS characterised by absolute humidity x.PS and temperature t.PS that are lower than those that correspond with the saturation state.

As a result, this mixing could be sufficient to prevent the danger of condensation in flue C even after further cooling of the flue gas in the flue C as far as the temperature t.cPS.

The "premix - discharge" bPS by-pass can be fixed, and activated manually, during installation for example, or automatically set by the EC control unit, if the valve R is composed of a motorised valve or equivalent means that can be automatically controlled.

It is known that the EC unit can adjust the speed of fan 2 for all outputs in order to obtain the required excess air. This is possible, at each instant, also as a corrective reaction to the actual combustion conditions, at least thanks to the sensors 6.1 and 6.2 according to methods already known in the aforementioned patent application AN2002A000038, recommended for reference in order to clearly understand the nature of the said sensors 6.1 and 6.2 . Therefore it is possible to prevent that a portion of the by-passed air interferes with the quality of the combustion, even if the by-passed quantity is determined in a manner that is not accurate. In short, by using the EC unit, it is possible to adjust the speed of fan 2 in a manner so that the amount of air necessary for correct combustion is always sent to the burner 5, while part of the same air escapes combustion through the by-pass bPS.

If the by-pass bPS has a fixed opening, the amount of air, or the by-passed air flow rate, is increased according to the increase of the speed of the fan 2 speed and therefore, the distributed output and the flue gas flow rate is also increased; this ensures a basically constant mix ratio between the cold air and flue gas according to flow rates. On the other hand, if the by-pass bPS provides for a valve R composed of a motorised valve, the by-passed flow rate can be adjusted independently of the comburent air flow rate sent to the burner 5; this provides the possibility of obtaining greater flue gas dilution for example, resulting greater reduction of the absolute humidity level x.PS,
- when the MC boiler functions at reduced power, a condition that provokes condensation more easily, and as a result also saturated flue gas,
- or a lower air temperature from duct 1, in other words, from the exterior, conditions that provide greater flue gas cooling, both during dilution and immediately afterwards, in the flue C.

It has been proven in laboratory tests that if the "premix - discharge" bPS by-pass takes in air blown by fan 2 sufficiently upstream of opening 3.1, through which the combustible gas is introduced into the premixing room 4, there is no danger that part of the combustible gas will escape through said by-pass bPS, instead of passing to burner 5.

However, the mixing of the flue gas with the cold air taken in by duct 1 can also be obtained using "introduced air- discharge" by-pass bIS: the neck of the Venturi tube bIS.2 and the corresponding increase of the section bIS.3 in duct 1, appropriately dimensioned, create a difference in pressure that is sufficient to send part of the cold air from duct 1 to duct 11. It is also possible to provide for known means, not shown in the drawing, for example, a motorised gate valve to adjust the opening of the passages bIS.1 through control by the EC unit. As for the changes to the flue gas state caused by the by-pass bIS, these are the same as those obtained using the by-pass bPS.

It can be seen that since the by-pass bPS or bIS does not interfere with the CMC boiler combustion mode at all, using exclusively cold air that is in addition to that used in the combustion process and the heat exchange in the heat exchanger 8, the CMC boiler heat yields are not altered at all; in particular the boiler condensing capacity is not altered. However in certain cases, in particular where external temperatures are very low or very humid, the dilution of the flue gas obtained using the means described above could be not sufficient enough to prevent condensation along the flue C, and could even lead to the forming of further condensate already during the mixing stage.

On the other hand, using the "combustion-discharge" bCS by-pass to mix the cooled flue gas from the heat exchanger with other very hot flue gas taken directly from the combustion room 7 at F state, does not reduce the absolute humidity x.f; on the contrary , it increases it as far as the x.CS value, if the flue gas that has crossed the heat exchanger 8 has condensed attaining F1 saturation state; however this mixture, identified by the CS state in figure 2, heats the flue gas to t.CS temperature, thus ensuring that the subsequential cooling in flue C at a temperature lower than t.cCS is not cold enough to produce condensation conditions. However, this by-pass does not prevent flue gas condensation in the heat exchanger 8 and therefore the condensate must be evacuated and collected in the condensate collector area 10. Nevertheless, obviously the CMC boiler yield results as reduced, in comparison with the same power and condensation, because part of the generated thermal energy is not sent to the heat exchanger 8 but used to heat the evacuated flue gas and then dispersed. This provokes the disadvantage of reducing boiler yield from the typical values of condensing boilers to those of "semi-condensing" boilers, but without being able to avoid the necessity of installing an appropriate condensation evacuation to the condensate collector area 10 all the same; furthermore, when appropriately dimensioned, the bCS by-pass prevents any release of condensate in the flue C.

Naturally the bCS by-pass can also be fixed, and activated manually during the installation stage, or it can be equipped with a valve R composed of a motorised valve or equivalent means controlled and adjustable by the EC unit. For example, this can permit the use of the bCS by-pass together with the aforementioned bPS by-pass, activating it only when the said bPS by-pass results as insufficient.

Lastly, the "combustion-collector" bCR by-pass is able to not modify the flue gas absolute humidity x.f at all, provided that a sufficient amount of flue gas is by-passed through the bCR.

In fact, since the mix between flue gas cooled by the heat exchanger 8 and the flue gas that has by-passed the exchanger occurs immediately downstream of the exchanger 8, the transported condensate can be immediately and completely re-evaporated, like the condensate that has deposited in the bottom of the condensate collector area 10, licked by the hot flue gas.

If condensation re-evaporation is complete, the state of the flue gas sent to flue C is now the state indicated by CR in figure 2, characterised by absolute humidity x.CR = x.f and by a temperature t.CR < t.f, but high enough to prevent the successive cooling in flue C from bringing the temperature t.cCR to saturation value. However, if re-evaporation is only partial, the flue gas mixture is brought to a state similar to the CS state.

The bCR by-pass can also be fixed and activated manually during installation, or equipped like the other models with a valve R, controllable by the EC unit. The bCR by-pass can also be used together with the by-passes bPS and/or bIS and or bCS previously illustrated, for similar purposes.

The bCR by-pass bCR provokes even greater yield reduction than that caused by the bCS by-pass, if used for the total re-evaporation of the condensate in area 10, but in reality it is in fact this use that is particularly advantageous in positions where it is not envisaged or easy to install a suitable corrosion-resistant flue, or even a condensate evacuation 10.3. Therefore, according to this method the CMC boiler is transformed in all aspects into a non-condensing boiler, but it remains a high yield boiler all the same by preventing condensation from forming in the flue C as well as eliminating the need for evacuation in the condensate collector 10. According to this method, a particularly advantageous variant of this invention envisages that the condensate collector area 10 be equipped with a condensation sensor 10.1, such as a level indicator for example, that the bCR by-pass opening be equipped with a valve that can be opened and closed by the EC unit, and that said EC unit adjusts said opening in order to prevent condensate from forming in the flue C as well as accumulating condensate in the condensate collector area 10.

As far as the yield reduction caused by said by-passes bPS, bCS, bCR, bIS is concerned, this is either absent or very low, in fact, the effect can be summarised as follows:
- the bPS or bIS by-pass does not interfere with heat exchange processing and maintains the CMC boiler condensing activity in all aspects without reducing yield;
- if used for only partial re-evaporation of the condensate in the condensate collector area 10, the bCS by-pass or even the bCR by-pass, transforms the CMC boiler from a condensing model to a semi-condensing version, bringing yield to typical levels of "semi-condensing" boilers;
- if used for total re-evaporation of the condensate in the condensate collector area 10, the bCR by-pass transforms the CMC condensing boiler into a high yield boiler.

And as far as utilisation possibilities are concerned,
- the bPS or bIS by-passes are not efficient in all working conditions, as described previously;
- if used for only partial re-evaporation of the condensate in the condensate collector area 10, the bCS or even the bCR by-pass is efficient in all circumstances, but requires the presence of a condensate evacuation duct 10.3;
- if used for total re-evaporation of the condensate in the condensate collector area 10, the bCR by-pass does not require the presence of a condensate evacuation duct 10.3.

In short, the CMC condensing boiler according to this invention can foresee variants of greater or lesser complexity using one or more of the by-passes bPS, bCS, bCR and bIS.

Some or all of the said by-passes bPS, bCS, bCR and bIS can be composed of fixed open systems made operable through manual intervention during production or installation stages according to the type of Flue C used, and whether the flue is compatible or not with acid condensate.

Otherwise, said by-passes bPS, bCS, bCR and bIS can be equipped with a motorised opening system, activated by the EC unit, and in this case, this may be either an ON/OFF or modulating type.

For systems activated by the EC unit, generally the unit is already programmed to identify parameters for other purposes, these parameters being able to furnish all the information necessary to decide whether and to what extent one or more of the by-passes among said used by-passes bPS, bCS, bCR and bIS should be activated. In fact the sensors 6.1 and 6.2 could be sufficient to identify the physical state F and F1. On a more general scale it can be noted that the amount of steam brought by the flue gas to combustion can be calculated, if the combustion gas type is known. Since the portion of absolute humidity supplied by combustion is far greater than that supplied by the comburent air, the flue gas absolute humidity can be obtained very accurately by calculating the absolute humidity of the comburent air or, in other words, its physical state A, and by knowing the excess combustion air; this in turn can be identified reasonably accurately for each boiler model, or can be measured using known means such as sensors 6.1 and 6.2. Therefore the various physical state of the flue gas such as PS, CS and CR, can be determined in turn through the mixing ratios operated by the various by-passes bPS, bCS, bCR, bIS.

Furthermore, there is no reason why appropriate parameter sensors should not be applied to inform the EC unit of the physical state A of the external air taken in by duct 1 and/or by flue gas F, F1, PS, CS, CR. Said parameters could consist of the temperature and/or the humidity of said air and/or flue gas measured in the most important position by the corresponding sensor s.Air, sF, sF1, sPS, sCS, sCR, and would be used to permit the said EC unit to establish whether the flue gas being evacuated at that moment is capable of releasing condensation in the flue C to a greater or lesser extent. The algorithms necessary for this object can obviously be developed according to the bases of well-recognised technical physical notions, and basically they can apply the psychrometric diagram shown in figure 2, in tabular form or calculated using mathematical relations.

To summarise, the means described by the invention exclude the possibility of flue gas condensation in a flue C, by ensuring that the flue gas is introduced in physical conditions ( temperature t and humidity x) so that successive cooling action will maintain the absolute humidity x at levels lower than that of saturation x.s. in any case, thus obtaining:
- either the dilution of flue gas with external air in order to lower the humidity x.1 sufficiently,
- or heating it so that the temperature reached in the flue C is maintained at a sufficiently high level,
- or by intervening in bother manners.

It is obvious that the combination of said actions, with the added possibility of adjusting the by-passable air or flue gas flow rate, provides a large number of possible effective methods for CMC boiler use, impossible to list completely herein, but all within the competence of technicians skilled in the art.

As an example, a method to prevent the release of condensate in the flue C using certain means described above could be the following:
- the control of the temperature of the aeriform substances taken in and/or evacuated and/or their absolute humidity, and the use of the "premix - discharge" bPS or the "introduced air - discharge" bIS by-pass only, thus guaranteeing the maximum possible yield until a sufficient level has been reached;
- the additional activating of the "combustion - discharge" bCS by-pass or the "combustion - collector" bCR by-pass, setting the by-pass at the minimum strictly necessary to prevent condensate release into the flue C, and in this way, penalising yield to a minimum.

On the other hand, if the location where the CMC boiler is to be installed not only has no flue C suitable for condensation, but does not even provide for the possibility of eliminating the acid condensation, at least the "combustion - discharge" bCR by-pass must be installed. This way the CMC boiler could perform as follows:
- the control of the temperature of the aeriform substances taken in and/or evacuated and/or their absolute humidity, and the use of the "premix - discharge" bPS or the "introduced air - discharge" bIS by-pass only, thus guaranteeing the maximum possible yield until a sufficient level has been reached and on condition that the sensor 10.1 does not indicate the presence of condensate in the condensate collector area 10,
- the additional or alternative activating of the "combustion - discharge" bCS by-pass
   - or setting the by-pass at the minimum strictly necessary to prevent condensate release into the flue C, and in this way, penalising yield to a minimum,
   - and/or for the minimum time strictly necessary for evaporating the condensate deposited in the condensate collector area 10 each time the sensor indicates the presence of condensate.

Naturally, there is no reason why the methods and means provided in the present invention should not be used together with those already described in the patent application entitled "Multi-purpose wall mounted forced draught boiler"; and in this manner is attained the object of producing a combustible-fired condensing heat generator that can be connected to any kind of flue.

Lastly, even though in figure 2 the physical state F1 of the flue gas in exit from the heat exchanger is that obtained when the CMC boiler performs condensing action, it is clear that the means and methods of this invention are useful and efficient even when the boiler is not in condensing condition, but when it emits flue gas at absolute humidity and temperatures that all the same are of a level that make successive condensation possible in the flue C; and therefore the methods and means described in the present invention can be applied usefully even to this type of boiler.

## Claims

1. Combustible fired, condensing heat generator, in particular a sealed, premix (CMC) wall boiler to be connected to a flue (A)
**characterised by** the fact that
one or more means are envisaged (bPS; bCS; bCR; bIS) adapted to modify the physical state (F1) of the flue gas on exit from the heat exchanger (8) to assume a different physical state (PS; CS; CR) so that the successive physical state (cPS; cCS; cCR) reached by said flue gas inside the flue (C) caused by cooling inside the flue coincides with the flue gas saturation condition.

2. Heat generator according to claim 1
**characterised by** the fact that
said modification of the physical state (F1) of the flue gas on exit from the heat exchanger (8) occurs through dilution of said flue gas, before it is introduced into the flue (A) with air at a physical state (A) that corresponds with an absolute humidity (x.a) lower than that (x.l) relative to said physical state (F1) so that to the new physical state (PS) corresponds an absolute humidity (xPS) less than the absolute humidity (x.l) that corresponds with said previous physical state (F1).

3. Heat generator according to the previous claim 2
**characterised by** the fact that
said air at physical state (A) is air taken from the exterior.

4. Heat generator according to claim 1
**characterised by** the fact that
said modification of the physical state (F1) of the flue gas on exit from the heat exchanger (8) occurs through the heating of said flue gas before it is sent into the flue (A).

5. Heat generator according to the previous claim
**characterised by** the fact that
said heating action occurs through the mixing of said flue gas, with flue gas at a physical state (F) that corresponds with a temperature (t.f) higher than that (t.l) relative to said physical state (F1) of the flue gas on exit from the heat exchanger (8) so that the new physical state (CS; CR) corresponds with a temperature (t.CS; t.CR) higher than the temperature (t.1) corresponding with the said previous physical state (F1).

6. Heat generator according to the previous claim
**characterised by** the fact that
said flue gas at a physical state (F) corresponding with a temperature (t.f) higher than that (t.l) relative to the physical state (F1) of the flue gas on exit from the heat exchanger (8) is taken directly from the combustion room (7).

7. Heat generator according to the previous claims 5 or 6
**characterised by** the fact that
said flue gas taken directly from the combustion room (7) is mixed with said flue gas on exit from the heat exchanger (8) entering the condensate collector zone (10) so that at least partial re-evaporation is provoked in the condensates that may have been produced due to the cooling action in the heat exchanger (8).

8. Heat generator according to the previous claim
**characterised by** the fact that
said re-evaporation is complete and brings said flue gas in exit from the heat exchanger (8) to a physical state (CR) that corresponds with an absolute humidity (x.CR) equal to that (x.f) of the flue gas generated by the burner (5).

9. Heat generator according to claim 1
**characterised by** the fact that
said modification of the physical state (F1) of the flue gas in exit from the heat exchanger (8) to a physical state different from the successive physical state (cPS; cCS; cCR) reached by said flue gas inside the flue (C) due to the cooling inside the flue, corresponds with the flue gas unsaturated condition obtained through the combined effect
- of the dilution of the same flue gas according to at least claim 1,
- and of its heating according to at least claim 4.

10. Heat generator according to at least claim 2
**characterised by** the fact that
said means (bPS; bCS; bCR; bIS) adapted to modify the physical state (F1) of the flue gas in exit from the heat exchanger (8) includes the by-passes (bPS; bIS) adapted to produce a mix of said flue gas in exit from the heat exchanger(8) with air taken in from a point upstream of the burner (5) and the gas emission opening (3.1).

11. Heat generator according to at least claim 2
**characterised by** the fact that
said means (bPS; bCS; bCR; bIS) adapted to modify the physical state (F1) of the flue gas in exit from the heat exchanger (8) includes a by-pass (bIS) adapted to produce the mix of said flue gas in exit from the heat exchanger (8) with air taken in from a point upstream of the fan 2.

12. Heat generator according to claim 4
**characterised by** the fact that
said means (bPS; bCS; bCR; bIS) adapted to modify the physical state (F1) of the flue gas in exit from the heat exchanger (8) comprise
- by-passes (bCS; bCR) adapted to produce the mix of said flue gas in exit from the heat exchanger (8) with flue gas taken in from a point upstream of the heat exchanger (8).

13. Heat generator according to claims 10 or 11
**characterised by** the fact that
said by-passes (bPS; bCS; bCR) include a passage (Ch) and a means of interception (R).

14. Heat generator according to claim 13
**characterised by** the fact that
said interception means (R) is manually operated, open or removed
- only when necessary,
- and during the production or installation stages of said heat generator.

15. Heat generator according to the previous claim
**characterised by** the fact that
said interception means (R) consist of a removable plug.

16. Heat generator according to claim 13
**characterised by** the fact that
said interception means (R) consists of an interception device (R) with automatic opening action, adapted to be manoeuvred by an appropriate control unit (CE).

17. Heat generator according to claim 15
**characterised by** the fact that
said interception device (R) foresees an ON/OFF type opening action.

18. Heat generator according to claim 15
**characterised by** the fact that
said interception device (R) foresees a modulation type opening action.

19. Heat generator according to at least claims 2 and 10
**characterised by** the fact that
said mixing occurs by means of a "pre-mix - discharge" by pass (bPS) adapted to transmit the external air from the pre-mix room (4) to the flue gas evacuation room (11).

20. Heat generator according to at least claims 2 and 10
**characterised by** the fact that
said mixing occurs by means of a "introduced air - discharge" by pass (bIS) adapted to transmit the external air from the air intake duct (1) to the flue gas evacuation room (11).

21. Heat generator according to the previous claim
**characterised by** the fact that
said "introduced air - discharge" by pass (bIS) includes the passages (bIS.1) in correspondence with the neck of a Venturi tube (bIS.2), installed in the flue gas evacuation duct (11), and the consequential increase in the section (bIS.3) of the air intake duct (1),
also foreseen in said passages (bIS.1) are an equal number of interception devices (R)
- that can be either removed manually during said heat generator production or installation stages,
- or that can be equipped with automatic ON/OFF or modulating opening action, adapted to be manoeuvred by an appropriate control unit (CE).

22. Heat generator according to at least claims 4 and 12
**characterised by** the fact that
said mixing occurs by means of a "combustion - discharge" by-pass (bCS) adapted to transmit the flue gas taken from the combustion room (7) to the flue gas evacuation flue (11) downstream of the condensation collector area (10).

23. Heat generator according to at least claims 4 and 12
**characterised by** the fact that
said mixing occurs by means of a "combustion - collector" by-pass (bCR) adapted to transmit the flue gas taken from the combustion room (7) to the flue gas evacuation flue (11) in the condensation collector area (10).

24. Heat generator according to the previous claim
**characterised by** the fact that
said flue gas is taken from the combustion room (7) in quantities large enough to provoke the re-evaporation of all condensation produced by the heat exchanger (8).

25. Heat generator according to at least claims 16 or 21
**characterised by** the fact that
said control unit (CE), adapted to control the opening of one or more of said by-passes (bPS; bCS; bCR; bIS) already possesses for other purposes, all the data necessary to evaluate one or more of the physical states (A, F, Fl, PS, CS, CR) pertaining to external air, flue gas upstream and immediately downstream of the heat exchanger (8) respectively and therefore immediately downstream of said by-passes (bPS or bIS, bCS, bCR).

26. Heat generator according to at least claims 16 or 21
**characterised by** the fact that
said control unit (CE), adapted to control the opening of one or more of said by-passes (bPS; bCS; bCR; bIS) receives from one or more appropriate sensors (s.Air, sF, sFl, sPS, sCS, sCR) the data necessary to evaluate one or more of the physical states (A, F, Fl, PS, CS, CR) pertaining to external air, flue gas upstream and immediately downstream of the heat exchanger (8) respectively and therefore immediately downstream of said by-passes (bPS or bIS, bCS, bCR).

27. Heat generator according to the previous claim
**characterised by** the fact that
one or more of said sensors (s.Air, sF, sFl, sPS, sCS, sCR) consists of temperature sensors.

28. Heat generator according to claims 26 or 27
**characterised by** the fact that
one or more of said sensors (s.Air, sF, sFl, sPS, sCS, sCR) consists of absolute humidity sensors.

29. Heat generator according to s 26 or 27 or 28
**characterised by** the fact that
said sensor (sF) adapted to identify the physical state of flue gas upstream of the heat exchanger (8) coincides with two sensors (6.1, 6.2) adapted to identify, at least, the excess combustion air.

30. Heat generator according to at least claim 8
**characterised by** the fact that
a sensor (10.1) adapted to identify the presence of condensate is foreseen in the condensate collector area (10).

31. Method for operating a heat generator according to one or more of the previous claims
**characterised by** the fact that
where more than one operating method is available to prevent the deposit of condensate in the flue (C), the method chosen at each instant will be that which is most capable of penalising yield to a minimum.

32. Method for operating a heat generator according to one or more of the previous claims from 1 to 30
**characterised by** the fact that
where, in order to prevent condensate deposit in the flue (C), both the dilution of flue gas with external air and the heating of the same flue gas downstream of the heat exchanger are available,
- naturally the preferred method chosen will be the dilution of flue gas with external air,
- using the flue gas heating method only when said dilution of flue gas with external air is not sufficient enough to prevent condensate deposit.

33. Method for operating a heat generator according to one or more of the previous claims from 1 to 30
**characterised by** the fact that
flue gas heating is positioned immediately downstream of the heat exchanger (8) to prevent the forming of condensate in the flue (C) and the accumulation of condensate in the condensate collector area (10)
- either in the measure strictly necessary to prevent condensate release into the flue (C),
- and/or only for the time strictly necessary to evaporate the condensate deposit in the condensate collector area (10).

34. Combustible fired, high yield, or semi-condensing heat generator, liable to release condensate in the flue (C) at least under certain working conditions,
**characterised by** the fact that it possesses the means to operate according to the methods described in one or more of the previous claims.
